(19) Europäisches Patentamt
European Patent Office
Office européen des brevets

(11) EP 1 724 647 A1

(12) EUROPEAN PATENT APPLICATION
published in accordance with Art. 158(3) EPC

(43) Date of publication:
22.11.2006 Bulletin 2006/47

(51) Int Cl.:
G03G 15/20 (2006.01)    F16C 13/00 (2006.01)
B32B 27/30 (2006.01)

(21) Application number: 05720663.3

(22) Date of filing: 08.03.2005

(86) International application number:
PCT/JP2005/004392

(87) International publication number:
WO 2005/085961 (15.09.2005 Gazette 2005/37)

(84) Designated Contracting States:
AT BE BG CH CY CZ DE DK EE ES FI FR GB GR
HU IE IS IT LI LT LU MC NL PL PT RO SE SI SK TR

(30) Priority: 09.03.2004 JP 2004065715

(71) Applicant: JAPAN GORE-TEX, INC.
Setagaya-ku
Tokyo 156-8505 (JP)

(72) Inventor: KIKUKAWA, Hiroyasu,
c/o Japan Gore-tex Inc.
Tokyo 1568505 (JP)

(74) Representative: Wilson, Gary et al
Marks & Clerk
19 Royal Exchange Square
GB-Glasgow G1 3AE (GB)

(54) **ELASTIC MEMBER, ARTICLE FOR FIXING TONER AND DEVICE FOR FIXING TONER, AND METHOD FOR MANUFACTURING ELASTIC MEMBER**

(57)    An elastic member excellent in releasability which has a releasing layer, an elastic layer and a basic layer as component layers, wherein the releasing layer comprises a fluororesin film and the elastic layer comprises a porous fluororesin film having pores packed with an elastomer, and wherein the releasing layer is an uppermost layer and is contacted with the elastic layer. The above elastic member can have an elastic layer having a thickness less than that of a conventional elastic member and also can enhance the binding strength between an elastic layer, and a releasing layer, and thus can achieve the saving of electric power and also an enhanced quality of an image.

FIG. 1

EP 1 724 647 A1

**Description**

TECHNICAL FIELD

The present invention relates to an elastic member with superior release properties. In this specification, the primary application of the elastic member of the present invention focuses on toner fixing members, but applications of the elastic member of the present invention are not restricted to toner fixing members.

BACKGROUND ART

Suitable toner fixing members used in image fixing devices such as electrophotographic copiers and laser printers have had configurations in which a heat-resistant surface layer having toner release capacity such as fluororesin (mold-release layer) is provided on a base material formed from a resin or metal belt, or a metal roll.

With recent toner fixing members, technological developments have been made with the aim of resolving two major issues. The first issue is reduction in power consumption. Demand for reduction in power consumption by copiers and printers has increased in recent years along with an increasing trend towards energy conservation.

Of the total amount of power consumed by heat-fixing copiers or printers, the proportion of power consumption accounted for by the fixing device is said to be 50% or greater, and most of the power consumption in fixing devices is accounted for by preheating during stand-by. Consequently, methods have been adopted in order to decrease power consumption, such as reducing the standby preheating temperature or not preheating at all. For this reason, during printing, there are cases where the fixing member is preheated starting at the preheating temperature, but in cases where preheating is not carried out, it is necessary for the member to be heated from room temperature to the fixing temperature. Consequently, there is now a demand for a quick-start system in which the member is ramped up to its usable state in a short period of time. A reduction in heating capacity of the fixing member is crucial in order to realize this type of quick-start system.

One configuration for toner fixing members that can be cited as a means for achieving a reduction in heat capacity relates to the use of a thinner member. By reducing thickness, the heating capacity of the toner fixing member can be reduced, and thus it is possible to reduce the heating time and the heat energy required for elevating the temperature.

A second issue is increasing image quality output. Recently, the trend for increasing detail and the production of full-color output images has increased, and there is a demand for preventing loss in color reproducibility as a result of scattering of light between toner particles. For this reason, technologies have been developed whereby an elastic layer is provided between the base material and the release layer. In order to produce high-quality color fixed images, it is necessary to increase toner fluidity and to minimize space between toner particles. Thus, when the above elastic layer is provided, the pressure applied to the toner is more uniform, and the toner is more uniformly melted, thereby increasing quality.

In addition, a technology that will simultaneously solve the above two problems has been provided in which the thickness is reduced in a toner fixing member (fixing belt) having a configuration in which an elastic layer is provided between a belt base material and a release layer (e.g., refer to JP (Kokai 9-244450, JP (Kokai) 10-111613, JP (Kokai) 11-15303, JP (Kokai) 2002-91212, and JP (Kokai) 2003-98871). According to these patent citations, the elastic layer is common silicone rubber, and the release layer is generally formed from fluororesin.

However, with the technologies disclosed in these patent citations, there are restrictions on the hardness (particularly the hardness in the thickness direction) and thickness of the elastic layer, and design freedom is thus severely restricted. In addition, there has been the problem that binding between the elastic resin and the other layer (particularly the release layer) has been difficult.

Specifically, emphasizing durability, there is the need for forming an elastic layer using an elastic body that has a high degree of crosslinking and superior mechanical strength, and thus it has been difficult to respond to increasing levels of quality, because of the tendency for the hardness of the elastic layer to increase. On the other hand, emphasizing quality increase in the printed image, it is desirable to form an elastic layer using an elastic body that has a low degree of crosslinking, and is thus flexible and has low hardness. However, with this type of elastic layer, mechanical strength is low and there are problems with maintaining sufficient durability. In addition, there is a tendency for binding between the release layer and the elastic layer to be insufficient. With elastic layers formed from silicone rubber, techniques have generally been adopted in which a gap that correspond to the thickness of the elastic layer is provided between the base material and the release layer, and, after injecting liquid silicone resin into the this gap, the silicone resin is crosslinked. However, with this type of technique, it is difficult to form a uniform silicone rubber layer that is thin.

A coated layer for endless belts used in fixing is disclosed in JP (Kokai) 6-214479 as an elastic layer having a configuration that can address both the first and second issue described above, thereby allowing a high degree of design freedom in regard to hardness and thickness. This coating layer (or elastic layer) is a composite body formed from a porous body and an elastomer.

In the above coating layer, the porous body serves as a backbone for strengthening the elastomer. Thus, for example, a flexible elastic body that has low elasticity can be used, and, because a great reduction in thickness can be achieved, it is possible to achieve a reduction in heat capacity (specifically reduction in power consumption), while also increasing image quality output.

However, a resolution to the following problem still remains with the technology disclosed in JP (Kokai) 6-214479. With the endless belt for fixing disclosed in JP (Kokai) 6-214479, the surface of the above coating layer itself has superior release properties, but even better release properties are desired in order to achieve high-quality image output. In addition, because the coating layer has parts where the elastomer is exposed, there is still room for improvement in regard to durability (abrasion resistance) with respect to abrasion against the material to be fixed, such as paper, which occurs during printing. Consequently, it is desirable to provide a mold-release layer formed from fluororesin or the like on the surface of the above coating layer.

However, when an elastic body that is flexible and has low elasticity is used for the coating layer, it is difficult to achieve favorable binding between the above coating layer and the release layer. When the binding force between the above coating layer (elastic layer) and release layer is poor, there is the danger of problems with separation of the release layer during use of the toner fixing member.

The present invention was developed in light of the above state of affairs, and has the objective of providing a fixing member whereby the elastic layer can be reduced in thickness relative to past technologies, the intrinsic functionality of the elastic body that forms the elastic layer can be maintained, while increasing binding strength between the elastic layer and release layer, and whereby a toner fixing member can be produced which conserves power and outputs high image quality; a method for its manufacture; a toner fixing element having this elastic member as its component; and a fixing device that has this toner fixing element.

DISCLOSURE OF THE INVENTION

The main point of the elastic member of the present invention that can accomplish the above objective pertains to an elastic member that comprises a release layer, elastic layer, and base layer as constitutive layers, where the above release layer is a fluororesin film, the above clastic layer is a layer produced by loading an elastic body into the pores of a porous fluororesin film, and the above release layer is a surface layer that is in contact with the above elastic layer and has exceptional release properties. It is preferable for the fluororesin film that has the above release layer as a component and the porous fluororesin film having the above elastic layer as a component to be adhered by thermal welding.

The fluororesin film having the above release layer as a component is a polytetrafluoroethylene (PTFE) film, but it is also preferable for the film to be a porous PTFE compressed body.

In addition, the porous fluororesin film that is a component of the above elastic layer is preferably a porous PTFE film, and the elastic body that is a component of the elastic layer is preferably silicone rubber.

The above release layer has a thickness of 1 to 30 $\mu$m, but it is recommended that the above elastic layer have a thickness of 10 to 1000 $\mu$m.

The above base layer is preferably a layer that has metal or heat-resistant resin a component, and the shape is preferably belt-shaped or roll-shaped.

The production method for the elastic member of the present invention, involves, when producing the above elastic member, thermally welding the fluororesin that is a component of the release layer and the porous fluororesin film that is a component of the above elastic layer. Subsequently, liquid silicone rubber is loaded from the side of the porous fluororesin film into the pores of the porous fluororesin film, whereupon the silicone rubber is subjected to crosslinking.

In addition, the toner fixing element having the above elastic member and the fixing device having the above toner fixing element are also included in the present invention.

In this specification, the term "film" is a general term that includes so-called sheets and membranes.

BRIEF DESCRIPTION OF THE DRAWINGS

FIG. I is a schematic diagram of the cross-sectional structure of the elastic member produced in Experiment 1;

FIG. 2 is a schematic diagram of the cross-sectional structure of the laminated member produced in Experiment 2;

FIG. 3 is a cross-sectional schematic diagram for describing the method for injecting silicone rubber between the stainless steel tube and base-layer metal tube, as carried out in Experiment 3;

FIG. 4 is a schematic diagram showing the cross-sectional structure of the laminate of the base layer and elastic layer produced in Experiment 3;

FIG. 5 is a schematic diagram showing the cross-sectional structure the elastic member produced in Experiments 3 and 4;

FIG. 6 is a schematic diagram showing the cross-sectional structure of the elastic member produced in Experiment 5; and

FIG. 7 is a schematic diagram showing the cross-sectional structure of the laminated member produced in Experiment 6.

BEST MODE FOR CARRYING OUT THE INVENTION

With the elastic member of the present invention, an improved method is provided for forming a release layer formed from fluororesin film and an elastic layer formed from a porous fluororesin film with pores loaded with elastic body. Consequently, it is possible to increase binding strength between the release layer and the elastic layer, reduce power consumption, and output high image quality, while also allowing production of a toner fixing element which controls problems with separation of the release layer. The present invention is described in detail below.

<Release layer>

The release layer pertaining to the present invention is a fluororesin film. Characteristics desired of the release layer of the toner fixing member are heat resistance, abrasion resistance, toner release properties, and barrier or non-swelling properties with respect to release oils or waxes. The reason that heat resistance is desired is that the conditions of use of the toner fixing member involve comparatively high temperatures (e.g., about 100 to 230°C). The reason that abrasion resistance is desired is that contact between the paper or toner fixing element and the corresponding press member or the like causes abrasion of the release layer. The reason that release properties with respect to toner are desired is due to contact between the release layer and the surface of the material to be fixed (specifically, the surface to which the toner has been applied). In addition, with toner fixing elements, release oils or waxes are added to toners in order to ensure release from the material to be fixed. Consequently, it is desirable for the release layer of the top-most release layer in the toner fixing element to prevent release oil or wax from causing swelling of the elastic layer underneath the release, and to prevent swelling of the release layer itself. Materials that can ensure these types of characteristics that are desired of release layers include fluororesins. In addition, fluororesins are also desirable because they decrease impact between the toner fixing element and the various elements abutting same, such as pressing elements that act on the toner fixing element in the fixing device.
Examples of the fluororesin that is a component of the fluororesin film pertaining to the release layer include PTFE, tetrafluoroethylene-perfluoroalkyl vinyl ether copolymer (PFA), tetrafluoroethylene-hexafluoropropylene copolymer (FEP), and ethylene-tetrafluoroethylene copolymer (ETFE). Among these materials, PTFE is preferred from the standpoint of heat resistance and flexibility. PTFE films have preferable flexibility relative to other fluororesin films (e.g., PFA films), and, by fully utilizing the elasticity of the elastic layer, prevent cracks from arising in the release layer, making it possible to perform high-quality printing.
With the objective of endowing the fluororesin film with conductivity or increasing its heat transfer properties, carbon particles (e.g., carbon black), metal powder, or the like may be included.
Although this will be described in detail below, it is preferable for the fluororesin used for the fluorine resin film that is a component of the mold release layer and the porous fluororesin film that is a component of the elastic layer to be the same.
The method for producing the PTFE film may be any method for obtaining PTFE films that provides adequate structure (a structure that substantially has no voids). Conventional well-known methods may be used without restrictions, such as so-called skiving methods in which PTFE stock or the like is thinly shaved, or coating methods in which a dispersion of PTFE resin particles is spray-coated. However, a PTFE compressed body can provide a thin PTFE film, and is thus desired. In addition a PTFE compressed body is produced using the porous PTFE film as raw material, as described below, and thus large-sized films that are strong in both the thickness direction and surface directions can be readily produced.
A PTFE compressed body is a material that is produced by pressing drawn porous PTFE film, and the material has substantially no voids or an extremely low void ratio because the voids have collapsed.

Thus, drawn porous PTFE films are obtained by mixing PTFE fine powder (crystallinity: 90% or greater) with auxiliary agents to form a paste, molding the paste, removing the molding auxiliary agent from this molded body, drawing at a high rate and temperature (temperature below the PTFE melting point (about 327°C), e.g., about 300°C), and then baking as necessary.

During drawing, if drawing is carried out in only one direction, the MD direction (lengthwise direction of the drawn porous PTFE film during manufacture) or TD direction (direction perpendicular to the MD direction), then a monoaxial drawn porous PTFE film will be obtained. If drawing is carried out in both the MD direction and TD direction, on the other hand, a biaxially drawn porous PTFE film will be obtained.

With monoaxially drawn porous PTFE films, the nodes (crystals that are folded over) will be long islands that are at right angles to the drawing direction, and fibrils (linear chain-form molecular bundles that are released and drawn out due to drawing of the folded crystals) will be oriented in the drawing direction in the form of a reed blind, so that the nodes will be linked. Consequently, a fibrous structure will be produced in which gaps that are between fibrils or are delineated by the fibrils and nodes become pores. In addition, with biaxially drawn porous PTFE films, the fibrils expand radially, and the nodes that connect the fibrils are present as island-like points. A fibrous structure is thus produced in which the gaps that are delineated by the fibrils and nodes are present as multiple spider webs.

With the above compressed body, it is preferable to use biaxially drawn porous PTFE film as raw material. Biaxially drawn porous PTFE film is drawn in two directions (the MD direction and TD direction), and so anisotropy is decreased and superior characteristics (e.g., strength) can be ensured in the MD direction and TD directions in comparison to monoaxially drawn films. In addition, large-sized films can be produced, which is advantageous from the standpoint of cost.

With the above drawn porous PTFE films, it is preferable for the porosity to be 5 to 95%, with 40 to 90% being additionally desirable. The porosity referred to in this specification is a value that is determined using the following formula:

$$\text{Porosity (\%)} = 100 \times (\rho_0 - \rho_1)/\rho_0$$

by using the apparent density $\rho_1$ (g/cm$^2$) of the porous film measured according to JIS K 6885 and the density $\rho_0$ (g/cm$^3$) of the resin from which the film is formed. When the resin that constitutes the porous film is PTFE, the value is calculated at $\rho_0$ = 2.2 g/cm$^2$.

A suitable thickness for the drawn porous PTFE film will vary depending on the desired thickness of the above compressed body or the void ratio of the drawn porous PTFE film, but 3 to 500 $\mu$m is preferred, and 5 to 200 $\mu$m is even more preferable. The thickness of each film referred to in this specification is the average thickness (value determined by measurement in unloaded condition without spring-loading) measured using a dial gage (e.g., a 1/1000 mm dial thickness gage manufactured by Tecloc).

In producing the above compressed body from a drawn porous PTFE film, the drawn porous PTFE film is first compressed (pressed) at a temperature that is below its melting point, to obtain a pressed film (first compression step). At this point, the compression temperature is not particularly restricted, provided it is below the melting point of PTFE, but is normally a temperature that is 1°C or more below the melting point, preferably a temperature that is 100°C or more below the melting point. When the compression temperature is at or above the melting point of PTFE, contraction of the compressed body will increase, which is undesirable.

The compression conditions in the first compression step are conditions whereby the void ratio of the drawn film after this step is 50% or less relative to the drawn porous PTFE film prior to compression, preferably 20% or less, and more preferably 10% or less. The compressive force is ordinarily 0.5 to 60 N/mm$^2$, and preferably 1 to 50 N/mm$^2$. The compression device used in this step has no particular restrictions, provided that it is a device that can compress films. A calender roll device, belt press device, or other device having a configuration in which pressing is carried out as material passes between rolls or belts is suitable. When this type of device is used, the voids that are present between the layers of the film or within the film are readily pressed outwards as the drawn porous PTFE film is squeezed between the rolls or belts. Consequently, the generation of wrinkles or voids (e.g., voids at a level that can be discerned by observing the surface at a magnification of 2000 times using a scanning electron microscope) in the resulting compressed body can be controlled.

The resulting drawn film produced by the first compression step is then compressed (pressed) at a temperature that is at or above the melting point of PTFE (second compression step). The compression temperature in this case is not particularly restricted, provided that it is at least the melting point of PTFE, but the temperature is normally I to 100°C higher than the melting point, and a temperature that is 20 to 80°C higher than the melting point is additionally preferred. By using this temperature, it is possible to increase the surface planarity of the compressed body. At the point when compression is released, the compression temperature is preferably reduced to a temperature that is lower than the melting point of PTFE. It is undesirable for the pressure to be released at a temperature that is above the melting point of PTFE, because shrinkage of the compressed body will increase, and wrinkling will tend to occur.

It is preferable for the compression conditions during the second compression step to be such that the void ratio of the resulting fluororesin film is 5% or less, more preferably 1% or less. Specifically, it is preferable for the compressive force to be 0.01 to 50 N/mm$^2$ at the compressed surface, and particularly preferably 0.1 to 40 N/mm$^2$. There are no particular restrictions on the compression device used in this step, provided that the device can compress the film by constriction; however, a hot press device or belt press device that can perform heating and compression over a determinate period of time is preferred.

When the above compressed body is produced by this technique, a small quantity of voids will remain, but voids remain at a level that poses no problems in terms of characteristics when used as a release layer in elastic members. Specifically, as described above, there are no problems when the level of remaining voids is 5% or less, preferably 1% or less. It is most preferable for the film to be a fluororesin film with a void ratio of 0%.

The above compressed body can be obtained in a single step if a device is used whereby the temperature of the drawn porous PTFE film is increased to at least the melting point of PTFE while compressing the film, whereupon the film is reduced in temperature to below the melting point of PTFE while maintaining pressure. By means of this method, even if the temperature of the drawn porous PTFE film is at or above the melting point of PTFE at the point when compression is released, shrinkage of the produced compressed body is almost absent because the temperature of the drawn porous PTFE film can be reduced to a temperature that is lower than the melting point of PTFE prior to releasing the pressure that has been applied to the drawn porous PTFE film. For example, when a belt press device is used, it is possible to produce a compressed body while controlling shrinkage by means of applying a temperature that is at least as high as the melting point of PTFE with the drawn porous PTFE film in a compressed state between the belts, and then cooling the film to a temperature that is lower than this melting point. In addition, when a belt press device is used, it is possible to control voids and wrinkling in the resulting compressed body because the voids that are present between the layers of the film or inside the film are extruded out of the film when the drawn porous PTFE film is constricted between the belts. Moreover, use of a belt press device is also desirable because continuous production of a compressed body is possible.

In carrying out the first compression step described above, voids present in the compressed body are reduced in number, and it is thus preferable to carry out the above compression process in two or more steps.

In addition, when a hot press is used in the second compression step, heating and compression may be carried out while interposing a heat-resistant film with a smooth surface between the hot press plates and the drawn film. When a belt press device is used as well, heating and compression can be carried out with a heat-resistant film with a smooth surface interposed between the belt and film (drawn porous PTFE film or drawn film). It is appropriate to use a polyimide film as the heat-resistant film. By means of such a method, it is possible to simultaneously adjust the surface roughness (Ra) of the compressed film to match the surface roughness (Ra) of the heat-resistant film. Thus, this is effective when the belt surfaces of the belt press or the hot press plate surfaces of the hot press device cannot be made very smooth.

With the compressed body obtained by the above hot press method, it is easy to produce thin films (e.g., about 1 to 30 $\mu$m) which are difficult to produce by skiving methods. For example, a compressed body with a void ratio of 0% and a thickness of 8 $\mu$m can be produced by using a drawn porous PTFE film with a thickness of 40 $\mu$m and a void ratio of 80%, rolling the material to a void ratio of 2% and a thickness of 12 $\mu$m using a calender roll (roll temperature 70°C; first compression step), and then using a belt press to press the material under a press plate temperature of 320 to 400°C, a pressure of 10 N/mm$^2$, a travel rate of 0.5 to 2.0 m/min, and a press time of 0.5 to 10 min (second compression step). In addition, a compressed body with a void ratio of 0% and a thickness of 1 $\mu$m can be obtained by carrying out the same processes as above using a drawn porous PTFE film with a void ratio of 85% and a thickness of 9 $\mu$m.

In addition, in the above hot press method, it is possible to obtain a simple compressed body from a single drawn porous PTFE film, or 2 to 100, preferably 2 to 20 sheets of drawn porous PTFE film can be laminated to produce a laminated compressed body.

With the PTFE compressed body obtained in this manner, the specific gravity is 2.0 or greater, and voids, pin holes or fibril structures are not seen when the surface is observed with a scanning electron microscope (magnification 2000 times). In addition, when this compressed body is observed visually, the film is uniform and transparent, and no white non-transparent regions or white striations caused by the presence of voids, pin holes or fibril structures are observed.

The configuration of the fluororesin film used in the release layer has no particular restrictions, provided that it is a configuration that is desirable for the production of an elastic member, but forms such as plates (sheets) or tubes may be cited. In addition, these fluororesin films may be laminated films formed by the lamination of two or more sheets of thin fluororesin film.

With tube-shaped bodies, for example, the fluororesin film may be wound around a metal tube, and the tube can be obtained by thermally welding the ends at a temperature that is at or greater than the melting point of the fluororesin. In addition, when a laminated film is to be produced, a method may be adopted, for example, in which thin fluororesin films are laminated (for tubes, laminated by winding on a metal tube or the like), whereupon thermal welding of the interfacial surfaces is brought about at a temperature that is at or above the melting point of fluororesin.

With tube-shaped bodies, there are cases where there are local differences in thickness at the winding end, and there are cases where this thickness differential influences the output image. Methods for avoiding such situations include methods in which the film winding initiation end and termination end are cut at an incline, providing an angle in the thickness direction, whereupon the surfaces that have been cut at an incline are aligned and thermal welding is performed; methods in which winding is carried out so that the direction of the wound end of the film is not parallel to the axial direction of the tube (winding axis direction of the toner fixing element when the elastic member is used in a toner fixing element); and methods in which the thickness of the winding and laminated film is decreased, thereby decreasing the degree of thickness differential so that it is not at a level that influences the images.

The thickness of the release layer is, for example, 1 μm or greater, and more preferably 5 μm or greater, but 30 μm or less, and more preferably 20 μm or less. If the thickness is too small, mechanical strength will decrease, tending to cause problems with practicality. If the thickness is too great, on the other hand, then the heat capacity of the elastic member will increase, and the amount of heat (electricity) required for toner fixing will tend to increase when the fixing element is heated from room temperature to the fixing temperature. When the film is too thick, sufficient elasticity will not be manifested in the elastic layer that is provided as the layer under the release layer, and thus there will be cases where image quality suffers. The thickness of the fluororesin film that is a component of the release layer is to be selected appropriately based on the thickness of the release layer. When the fluororesin film is a laminate (or wound laminate with tube bodies), the value obtained by dividing the thickness of the release layer by the number of laminated layers of fluororesin is the approximate thickness of the fluororesin film.

With tube-shaped bodies, with the above method in which the thickness differential is reduced by decreasing the thickness of the film that is laminated by winding, the suitable thickness of the fluororesin film will vary depending on the type and particle diameter of the toner that is to be used, but a thickness of 10 μm or less is preferred, with 5 μm or less being additionally preferred.

From the standpoint of improving binding with the elastic layer, and from the standpoint of improving adhesion between laminated films in cases where the release layer is a laminate of fluororesin film, it is desirable to subject the fluororesin film used in the release layer to a surface reformation treatment. There are no particular restrictions on the method used for the surface reformation treatment, and various methods that are well known such as chemical etching or physical etching may be used.

For example, methods that may be cited include those that employ corona discharge treatment, excimer laser treatment, sandblast treatment, and the use of well-known reformation agents (e.g., metallic sodium, fluororesin surface treatment agents (Tetra-H, manufactured by Junkosha), and the like). In addition, it is preferable to apply primer in order to increase binding with the elastic body used in the elastic layer.

In addition to the above types of individual films, the fluororesin film used in the release layer may also be a film-form material produced by spray-coating the surface of the elastic layer with dispersion of fluororesin particles, and then baking.

<Elastic layer>

The elastic layer pertaining to the elastic member of the present invention is formed by loading elastic body into the pores of a porous fluororesin film. The elastic body has the function of ensuring elasticity in the elastic layer, and the porous fluororesin film has the function of a backbone that retains and strengthens the elastic body. By adopting this type of structure, it is possible to use an elastic body with extremely low mechanical strength and extremely low hardness. As a result, it is possible to provide high-quality images, and the thickness can be reduced relative to elastic layers having only a conventional elastomer as a component, thus allowing production of an elastic member with a low heat capacity and thereby shortening the heating time and achieving a reduction in the thermal energy required for temperature elevation. In other words, range of selection of the elastomer can be broadened because restrictions are relaxed regarding characteristics of the elastomer such as mechanical strength that influence the durability of the elastic member.

Regarding the fluororesin that is a component of the porous fluororesin film, for example, various resins may be cited as examples of the constitutive element (fluororesin) of the fluororesin film of the release layer. Among these materials, PTFE is preferred because it can provide a structure with high porosity and because there is little loss of functionality of the elastic body.

With the elastic member of the present invention, the release layer and the porous fluororesin film in the elastic layer are bonded by a thermal welding method (described in detail below). From the standpoint of increasing binding strength, it is preferable for the material that is used for the fluororesin that is a component of the porous fluororesin film to be the same as the resin that is a component of the fluororesin film of the release layer.

In general, fluororesins have small intermolecular adhesive forces, and in order to maintain practical mechanical strength, the molecular weight is increased accordingly (with indirect measurement methods such as the isotope method, the molecular weight is about 5,000,000 to 8,000,000). For this reason, even if the fluororesin is increased to above its melting point, the viscosity will be high (e.g., about $10^{10}$ to $10^{12}$ poise for PTFE), and it is generally difficult to carry out fusion molding. On the other hand, for example, when fluororesin films are heated to temperatures that are above the melting point of the fluororesin film or at a temperature (time) at which thermal decomposition begins, it is known that fusion between fluororesin films occurs. The interlayer welding force obtained by thermal fusion is strong, and, for example, is the same as or greater than the adhesive force obtained when a conventional elastic layer (layer composed only of elastomer) and fluororesin film (release layer) are affixed via a primer or the like. The melting point of the fluororesin and the thermal decomposition initiation temperature (as well as the thermal decomposition time at the temperature used for welding) will be different depending on the type, grade and processing conditions (e.g., processing atmosphere) of the fluororesin, and thus it is necessary to determine these parameters in advance using a DSC (differential scanning calorimeter) or TG (thermal gravimetric) analyzer.

In light of the above, a mode is particularly desirable, in the present invention, in which the release layer is formed from PTFE film, and the porous fluororesin film in the elastic layer is formed from porous PTFE film.

Examples of porous fluororesin films include films produced by forming a mixed powder by mixing fluororesin powder with a substance (resin powder, or the like) that dissolves in a specified solvent, and then using this specific solvent to elute away only this substance; films produced by molding a fluororesin film containing microparticles (inorganic microparticles or organic microparticles), and then drawing the film in order to generate cracks centered on the microparticles, thereby rendering the film porous; and drawn porous PTFE film that has been disclosed as raw material film for the PTFE compressed body that is a component of the release layer. Among these films, drawn porous PTFE films are desirable because the porous film itself is soft, a structure with sufficiently high porosity can be ensured, and the film also has superior mechanical strength. With drawn porous PTFE films, a biaxially drawn porous PTFE film is particularly appropriate, because the mechanical strength anisotropy is low, and a wide film can be produced, which is advantageous from the standpoint of cost. Examples of drawn porous PTFE films that may be cited include Gore-Tex (TM), manufactured by Japan Gore-Tex.

The void ratio of the porous fluororesin film is 40% or greater, more preferably 50% or greater, but 98% or less, more preferably 95% or less. If the void ratio is too small, then the voids into which the elastic body is filled will be too small, and sufficient elasticity will not be ensured. If the void ratio is too large, on the other hand, then there will be cases where the mechanical strength will be insufficient. The maximum pore diameter of the porous fluororesin film should be suitably determined in consideration of factors such as the characteristics (ease of filling) of the elastomer that is to be filled (or the uncrosslinked rubber for forming the elastomer (described in detail below)). However, the diameter is 0.01 $\mu$m or greater, more preferably 0.1 $\mu$m or greater, but 20 $\mu$m or less, and more preferably 10 $\mu$m or less. If the maximum pore diameter is too small, then it will be difficult to load the elastic body. If the maximum pore diameter is too large, on the other hand, then there will be cases where the mechanical strength is insufficient. The term "maximum pore diameter" used herein is a value measured in accordance with ASTM F316-86.

The elastomer that is a component of the elastic layer has no particular restrictions, provided that the material can flow into the pores of the porous fluororesin film and provide elasticity. Examples that may be cited include natural rubber; isoprene rubber, chloroprene tuber, butadiene rubber, styrene-butadiene rubber, nitrile rubber, acrylic rubber, fluorine rubber, silicone rubber, fluorosilicone rubber, sulfide rubber, urethane rubber, phosphazine rubber, and other synthetic rubbers; thermoplastic elastomers; and the like.

Examples of preferred materials are elastomers that have heat-resistance that is sufficient to withstand the toner fixing temperature (about 100 to 230°C). Specific examples include silicone rubber, fluorine rubber, and fluorosilicone rubber.

Examples of silicone rubbers include organopolysiloxane crosslinked material having a methyl-silicon backbone (e.g., methylsilicone rubber), and organopolysiloxane crosslinked material having an aromatic hydrocarbon-silicon backbone (e.g., phenylsilicone rubber). Examples of fluororubbers that may be cited include polyfluoromethylene crosslinked materials that may have residual hydrogen atoms (fluororubbers), and polyfluoromethylene crosslinked materials in which all of the hydrogen atoms are replaced with fluorine atoms (perfluororubbers). Examples of fluorosilicone rubbers include organopolysiloxane crosslinked materials having a fluoroalkyl group-silicon atom backbone (fluorosilicone rubbers may be cited; e.g., rubbers having dimethylsiloxane and methyltrifluoropropylsiloxane bonded structures, silicone crosslinked rubbers having polyether fluoride backbones (e.g., SIFEL, manufactured by Shinetsu Chemical Corp).

Particularly preferred elastomers are liquid silicone rubbers. Liquid silicone rubbers are liquids when not crosslinked, but form solid elastic bodies when a crosslinking reaction occurs. Thus, a production method may be adopted wherein the material is infused into pores of the porous fluororesin film when in liquid form, and is then subjected to crosslinking to produce an elastic body. Addition reactions in which the reaction is brought about by a precious metal catalyst and condensation reactions which are produced by the moisture content in air are examples of crosslinking reactions. Addition reactions are more preferred from the standpoint of mass production.

The viscosity of the liquid silicone rubber (uncrosslinked) is not particularly restricted, and is a level at which infusion into the pores of the porous fluororesin film is possible. In consideration of the ease of infusion into the pores of the porous fluororesin film, however, the viscosity is 1000 poise or less at 25°C, with 200 poise or less being preferred. If the viscosity is too high, then infusion into the pores of the porous fluororesin film will be difficult. The viscosity referred to herein is a value determined according to the method described in JIS K 7117-1, measured using a Toki Sangyo type-B viscometer (model BH).

In order to improve mechanical strength, provide conductivity and control thermal conduction in the elastic body, carbon (e.g., carbon black), metal microparticles, and other inorganic powders, and the like, may be included in the elastic body in ranges in which the desired characteristics of the elastic layer are not compromised.

From the standpoint of producing high-quality images when used as a toner fixing element, it is desirable for the elastic layer to be soft. When the elastic layer is soft, the uniformity of pressure and heat applied to the toner and the material to be fixed (e.g., paper) in the fixing nip will be improved.

The strength of the elastic layer can be adjusted based on the hardness of the elastomer. For example, the hardness of the elastomer is 80 or less on the Durometer A hardness scale, preferably 60 or less. If the hardness of the elastomer is too high, then there will be cases where it will not be possible to ensure sufficient effects in terms of providing an elastic layer (high-quality image production). The Durometer A hardness of the elastomer referred to herein is a value measured under conditions of 20°C and 55% RH (relative humidity) according to JIS K 6253. The elastomer of the elastomer layer preferably has a pull strength of 0.1 MPa or greater, more preferably 0.3 MPa or greater. If the pull strength of the elastomer is too small, then the mechanical strength of the elastomer layer will be low, and there will tend to be a large difference in mechanical strength between the release layer and the elastic layer. As a result, the binding strength between the release layer and the elastic layer will decrease, and the durability of the elastic member will be inadequate. The pull strength of the elastomer is a value measured according to JIS K 6249.

The shape of the porous fluororesin film used in the elastic layer may be tubular as well as flat (sheet-form). In addition, these porous fluororesin films may be laminated films produced by the lamination of two or more sheets of thin porous fluororesin film. The method for forming a laminated or tube-shaped porous fluororesin film (including tube-shaped laminated bodies) may be the same methods as those cited above in regard to the method for forming laminated or tube-shaped release layer fluororesin films. In addition, with tube-shaped bodies, the means described above used with the mold release layer fluororesin film may be used in order to prevent the thickness differential at the wound ends of these tube-shaped bodies from influencing the output images.

The thickness of the elastic layer is preferably 10 $\mu$m or greater, more preferably 20 $\mu$m or greater, but preferably 1000 $\mu$m or less, more preferably 200 $\mu$m or less. If the thickness of the elastic layer is too great, then the heat capacity of the elastic member will increase, and there will be cases where the member will not be able to sufficiently respond to the requirement of reduced power consumption. If the thickness is too small, on the other hand, then there will be cases where the mechanical strength will be too low, and there will also be cases where the elasticity of the elastic layer will be insufficient, making it impossible to sufficiently respond to the requirement of increased image quality output. The thickness of the porous fluororesin film is to be determined appropriately based on the thickness of the elastic layer. When the porous fluororesin film is to be used as a laminate (wound laminate with tube-shaped bodies), the approximate thickness of the porous fluororesin film is a value determined by dividing the thickness of the elastic layer by the number of laminated layers of the porous fluororesin.

With tube-shaped bodies, in the method whereby the thickness differential described above is reduced by decreasing the thickness of the wound laminated film, the preferred thickness of the film will vary depending on the type or particle diameter of the toner that is used. However, for example, a thickness of 40 $\mu$m or less is preferred, and 20 $\mu$m or less is additionally preferred.

The porous fluororesin film used in the elastic layer is preferably subjected to a surface reformation treatment in order to improve binding with the release layer. The same techniques as described in regard to the release layer may be used for the surface reformation treatment method.

<Base layer>

The base layer pertaining to the elastic member of the present invention is to be selected appropriately in accordance with its application. For example, when the material is to be used in a toner fixing member, the base layer has a form that allows use as a roll, belt, or rotating body that is suitable for use in toner fixing members. The size will vary depending on the configuration of the fixing device in which the toner fixing member is to be used, and, for example, the outer diameter is about 20 to 100 mm and the width (roll width or belt width) is about 200 to 450 mm. However, when an intermediate transfer belt is to be used in conjunction, or when it is to be suspended with a heating source that is disposed external to the toner fixing member, there are cases where a larger diameter is used.

Regarding the thickness, from the standpoint of thermal conduction and heat loss, it is preferable for the thickness to be low, provided that mechanical strength can be ensured, in order to reduce the heat capacity when used in a toner fixing member (reducing power consumption). For example, a thickness of about 0.02 to 3 mm is preferred.

The base layer material may be selected appropriately in accordance with the application of the elastic member.

For example, when the member is to be used as a toner fixing member, a material is to be used which can ensure a heat resistance sufficient to withstand the temperature required for toner fixing, and which can ensure pressure resistance sufficient to withstand the pressure that is applied during toner fixing. Specific examples include stainless steel, nickel, aluminum, iron, and other metals; glass fiber and other inorganic materials; polyimide and other heat-resistant resins; and the like. With fiber-form materials (glass fiber or the like), the material may also be a base layer that is formed in the form of a cloth.

From the standpoint of improving adhesion with the elastic layer, it is preferable for the base layer to be subjected to a surface reformation treatment. There are no particular restrictions on the surface reformation treatment, and various methods such as chemical etching or physical etching that are well known may be used. For example, various techniques described above in regard to the surface reformation treatment method for the fluororesin of the release layer may be cited. In addition, it is also preferable to apply a primer of the like in order to increase adhesion with the elastic body used in the elastic layer.

<Elastic member production method>

There are no particular restrictions on the production method for the elastic member, provided that a structure can be obtained in which the release layer, elastic layer, and base layer are laminated in sequence. There are also no restrictions on the layer to which the elastic layer is first laminated. Solidification (adhesion) between the layers may be carried out after lamination of each of the layers, or may be carried out all at once after lamination of all of the layers.

With the elastic member of the present invention, a configuration is preferred in which the fluororesin film that is a component of the release layer and the porous fluororesin film that is a component of the elastic layer are thermally welded, and thus it is preferable to adopt a technique that allows this to occur.

Thermal welding of the fluororesin film that is a component of the release layer and the porous fluororesin film that is a component of the elastic layer may be carried out prior to loading of the elastomer into the pores of the porous fluororesin film or may be carried out after loading.

Thermal welding of the fluororesin film that is a component of the elastic layer and the fluororesin film that is a component of the release layer may be carried out at from 327°C (melting point) to 380°C (temperature at which thermal decomposition begins) when these fluororesins are PTFE, or at from 302 to 310°C (melting point) to 320 to 340°C (temperature at which thermal decomposition begins) when the fluororesins are PFA.

The above thermal welding is carried out at high temperature in this manner, and thus it is preferable to adopt a method in which thermal welding is carried out with the pores in the porous fluororesin film that is a component of the elastic layer in a condition in which the elastomer is not loaded, whereupon the elastomer is loaded into the pores of the porous fluororesin film that is a component of the elastic layer. By means of this method, there is no danger of thermal degradation of the elastomer, and so it is possible to additionally increase the binding strength of the release layer and elastic layer. For the elastomer, on the other hand, a material can be used that has heat resistance that can withstand the temperature required for using it as an elastic member (e.g., about 100 to 230°C, which is required for toner fixing in toner fixing members). The method is thus advantageous in that selection of elastomers can be broadened.

On the other hand, when thermal welding is carried out after loading the elastomer into the pores of the porous fluororesin film, it is necessary to use a technique whereby thermal decomposition of the elastomer is prevented. In addition, when thermal welding of the fluororesin film that is a component of the release layer and the fluororesin film that is a component of the elastic layer is to be carried out in a state in which a base layer or other member is also provided, it is necessary to prevent thermal decomposition of the other member when the heat resistance of the other member such as a base layer is lower than that of the fluororesin. Other than decreasing temperature, reducing time or adjusting the other thermal welding parameters, the method whereby thermal decomposition of the aforementioned other member or elastomer is prevented may be a method in which thermal welding is carried out in an atmosphere of inert gas such as nitrogen gas (or a non-oxygenated or extremely low-oxygen atmosphere), or a method in which localized heating is carried out at only the regions to be thermally welded.

The method whereby the elastomer is loaded into the pores of the porous fluororesin film that is a component of the elastic layer may be a method in which uncrosslinked rubber or thermoplastic elastomer for forming the elastomer is infused into the pores in a flowable state (liquid or the like), whereupon the material is hardened or crosslinked. In order to produce a flowable condition in the uncrosslinked rubber or thermoplastic elastomer, a method involving heating or a method involving dissolution or dispersing in a solvent maybe used. It is preferable to use a rubber that is liquid at normal temperatures (or, preferably, a liquid silicone rubber). With uncrosslinked (uncured) rubbers, it is necessary to carry out crosslinking (curing) after loading of into the pores of the porous fluororesin film, but with thermoplastic elastomers, crosslinking is not necessary.

The method whereby the uncrosslinked rubber or thermoplastic elastomer that is in a flowable state (referred to below as "flowable rubber") is loaded into the pores of the porous fluororesin film may be a method in which the porous fluororesin film is immersed in a bath containing the flowable rubber, or a method in which the flowable rubber is applied to the porous fluororesin film. The excess flowable rubber that is affixed to the porous fluororesin film is preferably wiped off as necessary.

After thermal welding of the porous fluororesin film that is a component of the elastic layer and the fluororesin film that is a component of the release layer, the elastic body is loaded into the pores of the porous fluororesin film. Loading of the elastomer is carried out from the side of the porous fluororesin film.

When loading of the elastomer into the pores of the porous fluororesin film is carried out after lamination of the base layer and the porous fluororesin film that is a component of the elastic layer, the elastomer is loaded from the side of the porous fluororesin film when the base layer contains substantially no pores. On the other hand, when pores that are continuous with the other side are present on the side of the base layer (e.g., porous mesh-form or net-form material), the elastomer may also be loaded from the side of the porous fluororesin film or from the side of the base layer.

When the pores of the porous fluororesin film are loaded with elastomer after thermal welding of the fluororesin film that is a component of the release layer and the porous fluororesin film that is a component of the elastic layer, and after lamination of the porous fluororesin film and a base layer, loading can be carried out from the side of the porous fluororesin film when the base layer contains substantially no pores. On the other hand, the elastomer may also be loaded form the side of the base layer when the base layer has pores that are continuous from one side to the other.

Fixing of the elastic layer and base layer may be carried out by a method that utilizes the adhesive force of the elastic body; a method that utilizes the adhesive force of the elastic body with a primer interposed; a method that employs an adhesive; or the like. Primers and adhesives have no particular restrictions, but among well-known materials, a material may be selected that can provide characteristics (such as heat resistance) that are desired in the application for the elastic member, in accordance with the material that is used for the elastic layer or base layer in the elastic member.

For example, when a belt-form elastic member is to be produced, the method whereby lamination with the base layer is carried out after loading the elastomer into the pores of the porous fluororesin film that is a component of the elastic layer may involve formation of cylindrical material from the elastic layer; or, when a comparatively soft belt-form base layer is to be used, modification of the base layer into a soft material. Accordingly, it can be readily inserted and integrated on the inside of the cylindrical elastic layer, which is appropriate for facilitating production.

The elastic member of the present invention described above allows simultaneous reduction in elastic layer thickness and improvement in binding strength between the release layer and elastic layer. Consequently, with image fixing devices having the toner fixing element produced using the elastic member of the present invention as a structural component, it is possible to achieve reduction in power consumption and improvement in image quality output while maintaining a high level of release properties in the release layer.

Working Examples

The present invention is described in detail below by providing working examples. However, the present invention shall not be construed to be limited to the illustrated embodiments, and may indeed be implemented through suitable modification within the scope applicable to the essence described hereinbelow or hereinabove, with all such modifications being included within the technical purview of the invention.

Experiment I

<Production of the release layer PTFE film>

Biaxially drawn porous PTFE film (Gore-Tex, manufactured by Japan Gore-Tex; weight 4.4 g/m$^2$, void ratio 90%, thickness 20 $\mu$m, width 500 mm) was compressed under a roll temperature of 70°C, a linear pressure of 8 N/mm$^2$, and a feed rate of 6 m/min using a calender roll with an outer diameter of 300 mm, a width of 600 mm and an antirolling reaction force of 1 MN (maximum), thus producing a cloudy rolled film with a width of 500 mm, a length of 500 mm, a porosity of 5%, and a thickness of 2.1 $\mu$m. This rolled film was then sandwiched between two polyimide films (Upilex 20S, manufactured by Ube Kosan), and was hot-pressed for 5 min under conditions of a film plate temperature of 400°C and a surface pressure of 10 N/mm$^2$ using a hot press device with a press size of 750 mm $\times$ 750 mm and a maximum applied pressure of 2 MN. Subsequently, the material was gradually cooled to a press plate temperature of 25°C over a period of 60 min with pressure maintained, thereby producing a PTFE film with a width of 500 mm, a length of 500 mm, a void ratio of 0%, and a thickness of 2 $\mu$m which had high transparency and superior surface gloss.

A corona discharge surface treatment device was used, and one surface of the PTFE film was subjected to a corona discharge treatment under conditions of 50 W/m$^2$, thus producing a PTFE film for the mold release layer.

<Lamination of the elastic layer porous PTFE film and release layer PTFE film>

A biaxially drawn porous PTFE film (elastic layer porous PTFE film; Gore-Tex, manufactured by Japan Gore-Tex; weight 6.6 g/m$^2$, void ratio 85%, thickness 20 $\mu$m) was cut to a size of 440 mm (width) $\times$ 213 mm (depth), and the material was wound two times on a stainless steel roll with a length of 520 mm and an outer diameter of 34 mm, so that the film transverse direction was in the axial direction of the stainless steel tube, and the center in the transverse direction was in the approximate center in the axial direction of the stainless steel tube.

The release layer PTFE film was cut to a size of 500 mm (width) $\times$ 430 mm (depth), and with the corona discharge-treated surface on the inside, was wound on the elastic layer porous PTFE film of the stainless steel tube on which the elastic layer porous PTFE film had been wound, so that the transverse direction of the film was in the axial direction of the stainless steel tube, and the center in the transverse direction of the film was situated at the approximate center in the axial direction of the stainless steel tube. Winding of the release layer PTFE film was carried out four times around the circumference in the same winding direction the elastic layer porous PTFE film, and so that the winding termination end of the elastic layer porous PTFE film and the winding initiation end of the release layer PTFE film matched.

The release layer PTFE film and the elastic layer porous PTFE film that had been wound on the stainless steel tube were subjected to a thermal welding treatment at 375°C for 30 min using a forced convection/exhaust system high-temperature constant-temperature chamber (STPH-201, manufactured by Espec). Subsequently, the thermally welded film was removed from the tube by cutting parallel to the axis of the stainless steel tube in the vicinity of the winding initiation region, and the section where the elastic layer porous PTFE film and release layer PTFE film were laminated was cut to a with of 400 mm to obtain a laminated film with a total thickness of 48 $\mu$m (release layer thickness 8 $\mu$m, elastic layer porous PTFE film thickness 40 $\mu$m), a width of 400 mm, and a depth of 107 mm.

<Preparation of the base layer metal tube>

A metal tube (aluminum) with an inner diameter of 22 mm, an outer diameter of 25.4 mm at both ends, an outer diameter of 26.5 mm from 36 mm to 329 mm from one end, and a total length of 411.1 mm was prepared. Silicone rubber primer A manufactured by Shinetsu Chemical was applied with a brush to the surface in the region where the outer diameter of the metal tube was 26.5 mm, and then dried.

<Elastic layer elastomer loading and base layer lamination>

The aforementioned laminated film that had been thermally welded was cut to a size having a width of 329 mm and a depth of 83.3 mm. During cutting, the cut surface at the end parallel to the transverse direction was cut at an angle of 60° relative to the film surface. The laminated film that had been cut was then placed on a flat plate oriented with the elastic layer porous PTFE film side upwards, and 1.5 g of liquid room-temperature-curing silicone rubber (KE1031, Durometer A hardness 22; manufactured by Shinetsu Chemical) was applied with a rubber spatula to the elastic layer porous PTFE film surface and allowed to infuse into the pores. The excess silicone rubber was wiped off with a rubber spatula.

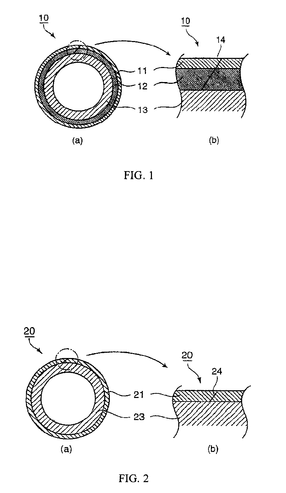

The aforementioned laminated film produced by infusing the silicone rubber into the elastic layer porous PTFE film pores was oriented so that the elastic layer porous PTFE film side was inwards, and the material was rapidly wound onto the region where the outer diameter of the above metal tube was 26.5 mm so that the ends of the laminated film aligned, while preventing air from flowing in. Subsequently, the metal tube with the laminated film wound on it was subjected to conditions of 70°C for 120 min using a forced hot air convection/exhaust format high-temperature constant temperature deice (STPH-201, manufactured by Espec) in order to bring about crosslinking of the silicone rubber and binding of the laminated film and metal tube, thus producing the roll-shaped elastic member having the cross-sectional structure presented in FIG. 1.

In FIG. 1, the numerical symbol 10 denotes the elastic member, I 1 denotes the release layer, 12 denotes the elastic layer, and 13 denotes the base layer. FIG. 1(a) is a cross-sectional view of the elastic member, and (b) is an enlarged view of the bonded region of the ends of the laminated film (release layer and elastic layer). In FIG. 1(b), the numerical symbol 14 denotes the joining surface of the two ends of the laminated film (release layer and elastic layer). In order to facilitate understanding of the structure in FIG. 1, the thickness ratio of the two layers is not the same as that of the material that was actually produced (likewise in FIG. 2 to 7). The resulting elastic member had a release layer thickness of 8 $\mu$m, an elastic layer thickness of 40 $\mu$m, a release layer region outer diameter of 26.6 mm, a release layer region length of 329 mm, and a total length of 411.1 mm. The following evaluations were carried out on the elastic member, and the results are presented in Table 1.

[Practical evaluation]

The above elastic member was used in place of the fixing roll in the fixing part of a Docuprint-C2220 full-color laser printer manufactured by Fuji Xerox. The printer was used, and a paper feed test was carried out on 50,000 sheets of copy paper while continuously printing a color print image chart over a surface area corresponding to 5% on one side (printing side) of commercially-available color copy paper (KB-F259, manufactured by Kokuyo; size A4). In this continuous paper feed test, red monochromatic color was printed over the entire surface of one side of the paper on the 1st, 10,000th, 20,000th, 30,0000th, 40,000th, and 50,000th sheet, and the output state, image gloss, and surface condition of the toner fixing element were evaluated.

The image gloss was measured using a Handy Glossmeter (IG-330, manufactured by Horiba Ltd.), and was evaluated as the average value of the reflectivity when light was incident at an angle of 60°, determined using three measurements on individual output sheets. The image gloss is a value that expresses the mirror-reflected light flux with light incident at the above angle on the image to be measured as a percentage, taking the reference mirror reflected light flux as 100%. In general, with color graphical images such as color photographs, there is little variation in toner gloss, and increasing values indicate favorable images with high gloss and no gloss variation.

The output condition and the toner fixing element surface condition were also evaluated visually.

Table 1

| Evaluation | Number of sheets output | | | | | |
| --- | --- | --- | --- | --- | --- | --- |
| | 1 sheet | 10,000 sheets | 20,000 sheets | 30,000 sheets | 40,000 sheets | 50,000 sheets |
| Output condition | Favorable | Favorable | Favorable | Favorable | Favorable | Favorable |
| Image gloss | 16 | 15 | 15 | 16 | 15 | 16 |
| Surface condition of the toner fixing element | Normal | Normal | Normal | Normal | Normal | Normal |

As shown in Table 1, with the elastic member of Experiment 1, the output condition, image gloss, and toner fixing element (elastic member) surface condition were stable from the beginning to end of the continuous paper feed test, and high-quality images were attained. In addition, binding between the release layer and the elastic layer was favorable. Moreover, it was possible to ensure favorable durability, even when an elastic body with extremely low hardness was produced, while also reducing elastic layer thickness.

Experiment 2

<Production of release layer laminated film>

A release layer PTFE film obtained in the same manner as in Experiment 1 on a stainless steel tube with an outer diameter of 34 mm and a length of 520 mm was cut to a size of 500 mm (width) × 430 mm (depth). With the corona discharge-treated surface inwards, the film was wound four times around the circumference, so that the transverse direction of the film was parallel with the axial direction of the stainless steel tube, and the center of the film in the transverse direction was situated at approximately the center in the axial direction of the stainless steel tube.

The release layer PTFE film that had been wound on the stainless steel tube was subjected to a thermal welding treatment under conditions of 375°C and 30 min using a forced convection/exhaust system high-temperature constant-temperature chamber (STPH-201, manufactured by Espec). Subsequently, the thermally welded film was removed from the tube by cutting parallel to the axis of the stainless steel tube in the vicinity of the winding initiation region, thus producing a laminated film (release layer film) with a thickness of 8 $\mu$m, a width of 500 mm and a depth of 107 mm. The corona discharge treatment side of this laminated film was subjected to a surface reformation treatment using the fluororesin surface treatment agent Tetra-H manufactured by Junkosha. The treatment method involved adapting the method described in the Tetra-H catalog (01.6.1000/D (GK)/P (SHU)) published by Junkosha. Specifically, after degreasing the etching surface using methyl ethyl ketone, the etched surface was brought into contact for 5 to 10 sec with Tetra-H that had been infused into a bat, whereupon the surface was cleaned with methanol and water in sequence, and dried.

<Preparation of the base layer metal tube>

A metal tube (aluminum) with an inner diameter of 22 mm, an outer diameter of 25.4 mm at both ends, an outer diameter of 26.6 mm from 36 mm to 329 mm from one end, and a total length of 411.1 mm was prepared. Primer PRX-3 for poorly adhesive materials manufactured by Cemedyne was applied with a brush to the surface in the region where the outer diameter of the metal tube was 26.6 mm, and was then dried.

<Release layer and base layer lamination>

The aforementioned release layer laminated film was cut to a size having a width of 329 mm and a depth of 83.3 mm. During cutting, the cut surface at the end parallel to the transverse direction was cut at an angle of 60° relative to the film surface. The laminated film that had been cut was then oriented so that the surface reformation treatment side was inwards, and, while preventing air from entering, the material was rapidly wound so that the ends of the laminated film were brought together on the surface in the region where the outer diameter of the above metal tube was 26.6 mm (surface to which primer PRX for poorly adhesive materials manufactured by Cemedyne was applied). A roll-shaped laminated material was obtained that had the cross-sectional structure presented in FIG. 2.
In FIG. 2, the numerical symbol 20 denotes the laminated member, 21 denotes the release layer, and 23 denotes the base layer. FIG. 2(a) is a cross-section of the laminated member, and (b) is an enlarged view of the bonded region of the ends of the laminated film (release layer). In FIG. 2(b), 24 the numerical symbol denotes the joining surface of the two ends of the laminated film (release layer). The resulting laminated member had a release layer thickness of 8 mm, an outer diameter of 26.6 mm, a release layer region length of 329 mm, and a total length of 411.1 mm. The same evaluations as in Experiment 1 were carried out on this laminated member, but because there was no elastic layer, the copy paper wound around the fixing roll (laminated member) on the first sheet, and image output was not possible

Experiment 3

<Production of release layer laminated film>

One surface was subjected to a corona discharge treatment and fluororesin surface treatment in the same manner as in Experiment 2 to obtain a release layer laminated film that had been subjected to a surface reformation treatment.

<Preparation of base layer metal tube>

In the same manner as in Experiment 1, a metal tube for use as the base layer was prepared by applying silicone rubber primer and drying it on the surface in the region in which the diameter as 26.5 mm.

<Elastic layer formation and base layer lamination>

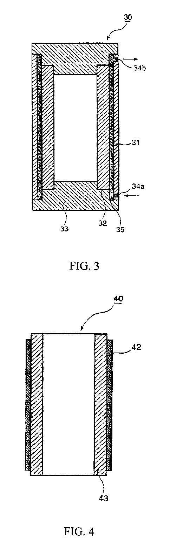

A stainless steel pipe that had been mirror finished on its inner surface with an outer diameter of 32 mm, an inner diameter of 26.6 mm, and a length of 440 mm was used, and the above metal tube for the base layer was situated concentrically on the inside of this stainless steel pipe. Meanwhile, two stainless steel convex lids for simultaneously sealing the interiors of the stainless steel pipe and the metal tube for the base layer were prepared. Holes with outer diameters of 3 mm were then made in the above stainless steel pipe extending from the outer surface to the inner surface in locations that were about 10 mm from each end in the axial direction.
Silicone rubber release agent KM722A manufactured by Shinetsu Chemical was then brushed onto the inner wall surface of the two stainless steel convex lids and the stainless steel pipe.
Next, the above metal tube for the base layer was inserted into the above stainless steel pipe, and, while disposing them concentrically, the stainless steel convex caps were inserted into both ends of the stainless steel pipe. The stainless steel pipe and the metal tube for the base layer were thereby fixed and sealed (the stainless steel pipe and metal tube for the base layer that have been fixed and sealed are referred to below as an "assembly").
The above assembly was situated so that the axis of the stainless steel pipe was vertical. Then, liquid room-temperature-curing silicone rubber with a Durometer A hardness of 22 (KE1031, manufactured by Shinetsu Chemical) was injected between the stainless steel pipe inner wall surface and the outer wall surface of the metal tube for the base layer in the above assembly. The injection method for the silicone rubber is described using FIG. 3. FIG. 3 is a cross-sectional view of the above assembly. 30 denotes the assembly, 31 denotes the stainless steel pipe, 32 denotes the metal tube for the base layer, 33 denotes the stainless steel convex caps, 34a denotes the lower passage hole of the assembly, 34b denotes the upper passage hole of the assembly, and 35 denotes liquid silicone rubber. Primer for silicone rubber was applied to the outer wall surface of the metal tube for the base layer 32 (not shown in the figures). Liquid silicone rubber was injected at a rate of 2 g/min using a syringe from the lower passage hole 34a of the passage holes formed in the stainless steel pipe 31 (downward arrow in FIG. 3), and injection was continued until the silicone rubber overflowed from the upper passage hole 34b (upper arrow in FIG. 3).
After injection of the silicone rubber, the assembly was then held in a state in which the axis of the stainless steel pipe was vertical, and crosslinking of the silicone rubber (elastic layer formation) as well as adhesion with the base layer were allowed to occur at 70°C for a period of 120 min using a forced hot air convection/exhaust-system high-temperature constant-temperature device (STPH-201, manufactured by Espec).

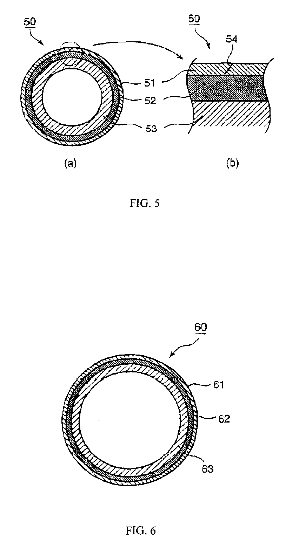

Subsequently, the metal tube for the base layer having the elastic layer formed on it was removed from the above assembly, and the cross-linked silicone rubber affixed to the regions other than the region of the metal tube with a diameter of 26.5 mm was removed, thereby obtaining a roll-shaped laminated body formed from the elastic layer and base layer. A cross-section of the roll-shaped laminated body is presented in FIG. 4. 40 denotes the roll-shaped laminated body, 42 denotes the cross-linked silicone rubber layer (elastic layer), and 43 denotes the base layer (metal tube for the base layer).

<Release layer lamination>

The above release layer laminated film was cut to a size with a width of 329 m and a depth of 83.5 mm. During cutting, an angle of 60° with respect to the plane of the film was made in the cut surface in the end parallel to the transverse direction.

Silicone rubber Primer-A manufactured by Shinetsu Chemical was brushed onto the elastic layer surface of the above roll-shaped laminate, and was dried.

Next, liquid room-temperature-curing silicone rubber (KE1031, manufactured by Shinetsu Chemical; Durometer A hardness 22) that was the same as the rubber used for the elastic layer was applied to the elastic layer surface (primer-coated surface). A spatula was used for application, and the excess silicone rubber was rolled off by rolling the roll-shaped laminate over a glass plate.

Subsequently, the above release layer laminate film was rapidly wound on the silicone rubber coated surface of the roll-shaped laminate with the surface-reformation treated surface inwards so that the ends of the laminated film aligned, while preventing air from entering. Subsequently, crosslinking of the silicone rubber applied to the surface of the elastic layer (adhesion of the release layer and elastic layer) was carried out under conditions of 120 min and 70°C using a forced hot air convection/exhaust system high-temperature constant-temperature device (STPII-201, manufactured by Espec), thus producing a roll-shaped elastic member having the cross-sectional structure shown in FIG. 5. In FIG. 5, 50 denotes the elastic member, 51 denotes the release layer, 52 denotes the silicone rubber layer (elastic layer), and 53 denotes the base layer. FIG. 5(a) is a cross-section of the elastic member, and (b) is an enlarged view of the bonded region of the ends of the laminated film (release layer). In FIG. 5(b), 54 denotes the joined surface of the two ends of the laminated film (release layer). The resulting elastic member had a release layer thickness of 8 $\mu$m, an elastic layer thickness of 40 $\mu$m, an outer diameter of 26.6 mm, a release layer region length of 329 mm, and a total length of 411.1 mm. The same evaluations as in Experiment 1 were carried out on this elastic member, and the results are presented in Table 2.

Table 2

| Evaluation | Number of sheets output | | |
| --- | --- | --- | --- |
| | 1 sheet | 10.000 sheets | 20,000 sheets |
| Output condition | Favorable | Favorable, but spotting on the image | After 10,000 sheets, the paper wound on the fixing roll, and output was not possible |
| Image gloss | 16 | 15 | 15 |
| Surface condition of the toner fixing element | Normal | Separation due to cohesive breakdown of the elastic layer near the elastic layer-release layer interface | Progressive widespread separation at the elastic layer-release layer interface |

As indicated in Table 2, with the elastic member of Experiment 3, output state, image gloss, and toner fixing member surface condition were all favorable at the start of the continuous paper feed test (first sheet), but the hardness of the elastic body used in the elastic layer was low, and the durability of the elastic layer and binding strength between the elastic layer and release layer were inferior. Consequently, undesirable results occurred after just 10,000 sheets.

Experiment 4

With the exception that the room-temperature-curing silicone rubber used in formation of the elastic layer and adhesion of the elastic layer and release layer was changed to SE4410 manufactured by Toray Dow Coming (Durometer A hardness 87), a roll-shaped elastic member was obtained in the same manner as in Experiment 3. The elastic member was subjected to the same evaluations as in Experiment 1, and the results are presented in Table 3.

Table 3

| Evaluation | Number of sheets output | | | | | |
|---|---|---|---|---|---|---|
| | 1 sheet | 10,000 sheets | 20,000 sheets | 30,000 sheets | 40,000 sheets | 50,000 sheets |
| Output condition | Favorable | Favorable | Favorable | Favorable | Favorable | Favorable |
| Image gloss | 10 | 10 | 11 | 10 | 10 | 11 |
| Surface condition of the toner fixing element | Normal | Normal | Normal | Normal | Normal | Normal |

As shown in Table 3, with the elastic member of Experiment 4, favorable output state and toner fixing element (elastic member) surface condition were favorably maintained from the beginning to the end of the continuous paper feeding test, but because the hardness of the elastic body used in the elastic layer was extremely high, the image gloss was inferior relative to the elastic member of Experiment 1, and high image quality was not adequately attained.

Experiment 5

<Elastic layer porous PTFE film and release layer PTFE film lamination>

Biaxially drawn porous PTFE film (elastic layer porous PTFE film; Gore-Tex, manufactured by Japan Gore-Tex; weight 2.5 g/m$^2$, void ratio 85%, thickness 10 $\mu$m) was cut to a size of 280 mm (width) $\times$ 301 mm (depth), and this material was wound four times around the circumference of a stainless steel roll with an outer diameter of 24 mm and a length of 300 mm, so that the film width direction was in the axial direction of the stainless steel tube, and so that the center of the film in the transverse direction was located at the approximate center in the axial direction of the stainless steel tube.

The release layer PTFE film was cut to a size of 300 mm (width) $\times$ 430 mm (depth) in the same manner as in Experiment 1, and, with the corona discharge-treated surface on the inside, was wound on the elastic layer porous PTFE film of the stainless steel tube on which the elastic layer porous PTFE film had been wound, so that the transverse direction of the film was in the axial direction of the stainless steel tube, and so that the center in the transverse direction of the film was situated at the approximate center in the axial direction of the stainless steel tube. Winding of the release layer PTFE film was carried out four times around the circumference so that the winding direction was the same as the winding direction of the elastic layer porous PTFE film, and so that the winding termination end of the elastic layer porous PTFE film and the winding initiation end of the release layer PTFE film were in alignment.

The release layer PTFE film and the elastic layer porous PTFE film that had been wound on the stainless steel tube were subjected to a thermal welding treatment at 375°C for 30 min using a forced convection/exhaust system high-temperature constant-temperature chamber (STPH-201, manufactured by Espec). Subsequently, the thermally welded film was removed from the tube, and the region where the elastic layer porous PTFE film and release layer PTFE film were laminated was cut at a width of 240 mm to obtain a cylindrical laminated film with a total thickness of 48 $\mu$m (release layer thickness: 8 $\mu$m, elastic layer porous PTFE film thickness: 40 $\mu$m), and an outer diameter of 24.1 mm.

<Preparation of the base layer metal tube>

A nickel metal belt (Dimco) with an outer diameter of 24 mm, a thickness of 30 $\mu$m, and a total length of 240 mm was prepared. Silicone rubber primer A manufactured by Shinetsu Chemical was brushed onto the outer surface of this metal belt, and allowed to dry.

<Elastic layer elastomer loading and base layer lamination>

1.5 g of liquid room-temperature-curing silicone rubber (KE1031, Durometer A hardness: 22; manufactured by Shinetsu Chemical) was applied with a rubber spatula to the surface of the elastic layer porous PTFE film of the aforementioned cylindrical laminated film that had been thermally welded, and the rubber was allowed to infuse into the pores of the porous PTFE film. The excess silicone rubber was wiped off with a rubber spatula.

The aforementioned base layer metal belt was inserted on the inside of the aforementioned cylindrical laminated film produced by infusing the silicone rubber into the pores of the elastic layer porous PTFE film, and, while preventing air from entering, the materials were laminated and fixed. Subsequently, joining between the laminated film and metal belt and crosslinking of the silicone rubber were carried out by placing this laminated material under conditions of 70°C and 120 min using a forced hot air convection/exhaust format high-temperature constant temperature deice (STPH-201, manufactured by Espec), thereby producing a belt-shaped elastic member having the cross-sectional structure presented in FIG. 6.

In FIG. 6, the numerical symbol 60 denotes the elastic member, 61 denotes the release layer, 62 denotes the elastic layer, and 63 denotes the base layer. The resulting elastic member had a release layer thickness of 8 $\mu$m, an elastic layer thickness of 40 $\mu$m, a total thickness of 78 $\mu$m, an inner diameter of 24 mm, and a total length (width) of 240 mm. The elastic member was subjected to the following evaluations, and the results are presented in Table 4.

[Practical evaluations]

The above elastic member was substituted for the fixing belt in the fixing component of a Canon LBP-2410 full-color laser printer. The printer was used, and evaluation was carried out by the same method as in Experiment 1 in regard to output condition and image gloss using commercially-available color copy paper (KB-F259, manufactured by Kokuyo; size A4) and printing (5 sheets) red monochromatic color over the entire surface of one side (printing surface).

Experiment 6

<Production of release layer laminated film>

In the same manner as in Experiment 2, a release layer laminated film was produced in which one surface was subjected to surface reformation treatment using corona discharge and a fluororesin surface treatment agent.

<Preparation of base layer metal belt>

Primer PRX-3 for poorly adhesive materials manufactured by Cemedyne was applied with a brush and dried on the outer surface of a cylindrical nickel metal belt in the same manner as in Experiment 5.

<Release layer and base layer lamination>

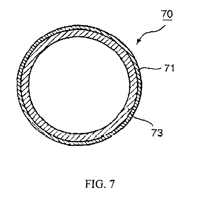

The above release layer laminated film was cut to a size with a width of 240 mm and a depth of 75 mm. During cutting, the cut surfaces at the ends parallel with the transverse direction were cut at an angle of 60° with respect to the film surface. The cut laminated film was rapidly wound on the outer surface of the above metal belt (surface to which PRX adhesive for poorly adhesive materials manufactured by Cemedyne was applied) without allowing air to enter and with the surface reformation treated surface facing inwards, so that the ends of the laminated film aligned. A belt-shaped laminated member having the cross-sectional structure shown in FIG. 7 was thus obtained.

In FIG. 7, the numerical symbol 70 denotes the laminated member, 71 denotes the release layer, and 73 denotes the base layer. The resulting laminated member had a release layer thickness of 8 $\mu$m, a total thickness of 38 $\mu$m, an inner diameter of 24 mm, and a total length (width) of 240 mm. The laminated member was subjected to the same evaluations as in Experiment 5, and the results are presented in Table 4.

Table 4

| | | Number of sheets produced | | | | |
|---|---|---|---|---|---|---|
| | Evaluation | 1 | 2 | 3 | 4 | 5 |
| Experiment 5 | Output condition | Favorable | Favorable | Favorable | Favorable | Favorable |
| | Image gloss | 8 | 7 | 8 | 7 | 7 |
| Experiment 6 | Output condition | Favorable | Favorable | Favorable | Favorable | Favorable |
| | Image gloss | 4 | 5 | 4 | 5 | 4 |

As is clear from Table 4, with the elastic member of Experiment 5 having the desired configuration, the output condition of the images was favorable, and the image gloss was superior relative to the laminated member of Experiment 6 that did not have an elastic member. In addition, high-quality image output was achieved, and binding between the release layer and the elastic layer was favorable. The thickness of the elastic layer could also be reduced, and favorable durability was ensured, even when an elastic body with extremely low hardness was employed.

INDUSTRIAL APPLICABILITY

The primary application for the elastic member of the present invention is a toner fixing member. The elastic member of the present invention can be used without modification in the same manner as conventional toner fixing members (fixing rolls or fixing belts). In addition, the elastic member of the present invention has superior surface release properties, while also being able to ensure sufficient elasticity due to the presence of the elastic layer. Consequently, when used in place of traditional elastic members for situations where release properties are desired, it is possible to more effectively manifest release properties and elasticity. For example, the member is suitable for use in belts for conveyor belts used in production lines for transporting products or intermediate products having varying levels of viscosity (e.g., rice cake, hamburger patties and other food materials, building products and other industrial materials, precision instrument-related materials and parts, and the like).

**Claims**

1. An elastic member having exceptional release properties comprising a release layer, an elastic layer, and a base layer; said elastic member **characterized in that**:

   the release layer is a fluororesin film;
   the elastic layer is obtained by loading an elastic body into the pores of a porous fluororesin film; and
   the release layer is the surfacemost layer and is in contact with the elastic layer.

2. The elastic member according to claim 1, wherein the fluororesin film that constitutes the release layer and the porous fluororesin film that constitutes the elastic layer are bonded by thermal welding.

3. The elastic member according to claim 1, wherein the fluororesin film that constitutes the release layer is a polytetrafluoroethylene film.

4. The elastic member according to claim 3, wherein the polytetrafluoroethylene film is a porous polytetrafluoroethylene compressed body.

5. The elastic member according to claim 1, wherein the porous fluororesin film that constitutes the above elastic layer is a porous polytetrafluoroethylene film.

6. The elastic member according to claim 1, wherein the elastic body that constitutes the elastic layer is a silicone rubber.

7. The elastic member according to claim 1, wherein the thickness of the release layer is 1 to 30 $\mu$m.

8. The elastic member according to claim 1, wherein the thickness of the elastic layer is 10 to 1000 $\mu$m.

9. The elastic member according to claim 1, wherein the base layer is composed of a metal or heat-resistant resin.

10. The elastic layer according to claim 1, wherein the above base layer is belt-shaped or roll-shaped.

11. A toner fixing element, **characterized by** having the elastic member according to claim 1.

12. A fixing device, **characterized by** having the toner fixing element according to claim 11.

13. A method for producing the elastic member according to claim 1, said method for producing the elastic member **characterized in that** the fluororesin film that constitutes the release layer and the porous fluororesin film that constitutes the elastic layer are thermally welded, liquid silicone rubber is subsequently loaded into the pores of the porous fluororesin film from the porous fluororesin film side, and the silicone rubber is then crosslinked.

FIG. 1

FIG. 2

FIG. 3

FIG. 4

FIG. 5

FIG. 6

FIG. 7

## INTERNATIONAL SEARCH REPORT

| | International application No. |
|---|---|
| | PCT/JP2005/004392 |

**A. CLASSIFICATION OF SUBJECT MATTER**
Int.Cl⁷ G03G15/20, F16C13/00, B32B27/30

According to International Patent Classification (IPC) or to both national classification and IPC

**B. FIELDS SEARCHED**

Minimum documentation searched (classification system followed by classification symbols)
Int.Cl⁷ G03G15/20, F16C13/00, B32B27/30

Documentation searched other than minimum documentation to the extent that such documents are included in the fields searched
Jitsuyo Shinan Koho          1922-1996    Jitsuyo Shinan Toroku Koho    1996-2005
Kokai Jitsuyo Shinan Koho    1971-2005    Toroku Jitsuyo Shinan Koho    1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 3-204672 A (Fuji Xerox Co., Ltd.), 06 September, 1991 (06.09.91), Page 5, lower left column, lines 2 to 17 & EP 441114 B1 & US 5123151 A & AU 635375 B & CA 2033602 C | 1-13 |
| Y | JP 11-257345 A (Canon Inc.), 21 September, 1999 (21.09.99), Full text (Family: none) | 1-13 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 June, 2005 (02.06.05) | 21 June, 2005 (21.06.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9244450 A
- JP 10111613 A
- JP 11015303 A
- JP 2002091212 A
- JP 2003098871 A
- JP 6214479 A